# EUROPEAN PATENT APPLICATION

(11) **EP 4 800 639 A1**
(43) Date of publication of application: **02.09.2026**
(21) Application number: 24898037.7
(22) Date of filing: 22.11.2024
(51) Int. Cl.: G06T 5/20, G06T 5/50, G06T 3/4015, G06T 7/11, G06F 3/0484, G06F 3/0482

(54) **IMAGE PROCESSING DEVICE AND METHOD**

(30) Priority: 01.12.2023 KR 20230172027
(71) Applicant: Samsung Electronics Co., Ltd., Suwon-si, Gyeonggi-do 16677 (KR)
(72) Inventor: KIM, Taehwan, Suwon-si, Gyeonggi-do 16677 (KR); JUNG, Minhyo, Suwon-si, Gyeonggi-do 16677 (KR)
(74) Representative: Appleyard Lees IP LLP
(86) International application number: PCT/KR2024/018687
(87) International publication number: WO 2025/116442

(57) **Abstract**

This display device may comprise a memory for storing at least one instruction, wherein the at least one instruction, when executed by at least one processor, causes the display device to: obtain a first screen capture image having a first data format; change a data format for the first screen capture image from the first data format to a second data format including a transparency element; adjust a value of the transparency element for a video region associated with a first video image in the first screen capture image to transparently process the video region; generate a second composite image on the basis of the first video image or a second video image following the first video image, and a second screen capture image including the transparently processed video region; and perform blur processing on the second composite image.

## Description

### [TECHNICAL FIELD]

The disclosure relates to an image processing device and method.

### [Background Art]

Recently, a display device such as a TV displays graphic information such as program guide information together with a video image based on a broadcast signal and provides the same to the user.

When the video image and the graphic image are provided together, it may sometimes be necessary to apply an image processing effect such as a blur effect to the image in order to effectively provide the desired information to the user. In this case, it is necessary to consider an image processing method for applying a desired image processing effect despite performance limitations such as hardware performance limitations and software performance limitations.

### [Disclosure]

### [TECHNICAL SOLUTION]

According to one or more example embodiments, a display device may include: a display; at least one processor; and memory storing at least one instruction that, when executed by the at least one processor, cause the display device to: obtain a first screen capture image having a first data format by capturing a first synthesized image generated based on a first video image and at least one graphic image using a screen capture method, wherein the first data format does not comprise a transparency element indicating transparency; change a data format for the first screen capture image from the first data format to a second data format comprising the transparency element; transparentize a video area associated with the first video image in the first screen capture image by adjusting a value of the transparency element for the video area, based on data of the second data format; generate a second synthesized image based on a second screen capture image comprising the transparentized video area and the first video image or a second video image following the first video image, wherein an area where the first video image or the second video image is displayed in the second synthesized image is in the transparentized video area; blur the second synthesized image; and control the display to display at least a portion of the blurred second synthesized image.

According to one or more example embodiments, a method of a display device, may include: obtaining a first screen capture image having a first data format by capturing a first synthesized image generated based on a first video image and at least one graphic image using a screen capture method, wherein the first data format does not comprise a transparency element indicating transparency; changing a data format for the first screen capture image from the first data format to a second data format may include the transparency element; transparentizing a video area associated with the first video image in the first screen capture image by adjusting a value of the transparency element for the video area, based on data of the second data format; generating a second synthesized image based on a second screen capture image may include the transparentized video area and the first video image or a second video image following the first video image, wherein an area where the first video image or the second video image is displayed in the second synthesized image is in the transparentized video area; blurring the second synthesized image; and displaying at least a portion of the blurred second synthesized image.

According to one or more example embodiments, a display device may include: a display; at least one processor; and memory storing at least one instruction that, when executed by the at least one processor, cause the display device to: generate a synthesized image comprising a graphic image and a video image positioned in a transparent region; receive an instruction to execute an application supporting blurring; based on the instruction, blur the synthesized image; generate a display image comprising at least a portion of the blurred synthesized image with an image associated with the application overlaid thereon; and control the display to display the display image.

### [DESCRIPTION OF DRAWINGS]

The above and other aspects, features, and advantages of certain embodiments of the disclosure will be more apparent from the following description taken in conjunction with the accompanying drawings, in which:
FIG. 1 is a block diagram illustrating a configuration of a display device according to an embodiment of the disclosure;
FIG. 2 is a block diagram illustrating a configuration of a display device according to an embodiment of the disclosure;
FIG. 3 is a view illustrating a procedure of processing video data and graphic data by a display device, according to an embodiment of the disclosure;
FIG. 4 is a view illustrating a capture operation of a display device according to an embodiment of the disclosure;
FIG. 5 is a view illustrating an image obtained through a capture operation of a display device according to an embodiment of the disclosure;
FIG. 6 illustrates a change in an output image according to execution of an application supporting image effect processing, according to an embodiment of the disclosure;
FIG. 7 is a view illustrating a blurring procedure according to an embodiment of the disclosure;
FIG. 8 is a view illustrating a result of blurring according to a blurring procedure in a multi-window case, according to an embodiment of the disclosure;
FIG. 9 is a view illustrating a result of blurring according to a blurring procedure in a multi-window case, according to an embodiment of the disclosure;
FIG. 10 is a view illustrating a blurring procedure according to an embodiment of the disclosure;
FIG. 11 is a view illustrating a blurring procedure according to an embodiment of the disclosure;
FIG. 12 illustrates a change in an image as a result of processing a screen capture image in a blurring procedure, according to an embodiment of the disclosure;
FIG. 13 illustrates an image obtained in a blurring procedure, according to an embodiment of the disclosure; and
FIG. 14 is a flowchart illustrating a method of a display device according to an embodiment of the disclosure.

### [MODE FOR INVENTION]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

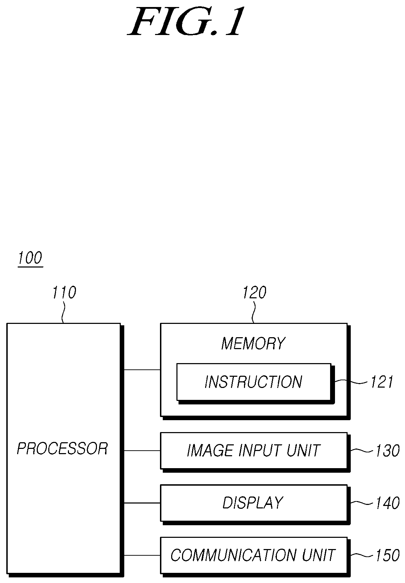

FIG. 1 is a block diagram illustrating a configuration of a display device according to an embodiment of the disclosure.

The display device 100 of FIG. 1 may be, but is not limited to, a smartphone, a tablet PC, a PC, a smart TV, a mobile phone, a personal digital assistant (PDA), a laptop computer, a media player, a micro server, a digital broadcast terminal, a navigation, a kiosk, a home appliance, or other mobile or non-mobile computing devices. With the display device 100, various computing functions, such as real-time video viewing and communication may be performed. In the following description, it is assumed that the display device 100 is a TV or a monitor, but this is merely an example and embodiments of the disclosure may be equally applied to electronic devices having a display function.

According to an embodiment, the display device 100 may include a processor (e.g., processing circuitry) 110, memory 120, an image input interface 130 (e.g., including image input circuitry), a display 140, and a communication interface (e.g., including communication circuitry) 150.

According to an embodiment, the memory 120 is a storage medium used by the display device 100 and may store data, such as at least one instruction 121 (e.g., at least one instruction corresponding to at least one program) or configuration information. The program may include an operating system (OS) program and various application programs.

According to an embodiment, the memory 120 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input interface 130 may receive image data through a tuner, an input/output interface, or the communication interface 150. The image input interface 130 may include at least one of the tuner or the input/output interface. The tuner may tune and select only the frequency of the broadcast channel desired to be received by the display device 100 among many radio components, by amplifying, mixing, and resonating the broadcast signals wiredly/wirelessly received. The broadcast signal may include video, audio, and additional data (e.g., electronic program guide (EPG)). The tuner may receive broadcast channels (or viewing images) from various broadcast sources, such as terrestrial broadcasts, cable broadcasts, satellite broadcasts, Internet broadcasts, and the like. The tuner may be implemented integrally with the display device 100 or may be implemented as a separate tuner electrically connected to the display device 100. The input/output interface may include at least one of a high definition multimedia interface (HDMI) input port, a component input jack, a PC input port, or a USB input jack capable of receiving image data from an external device of the display device 100 under the control of the processor 110. It is obvious to one of ordinary skill in the art that the input/output interface may be added, deleted, and/or changed according to the performance and structure of the display device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 140 may display a screen corresponding to data received from the processor 110. The display 140 may be referred to as an 'output unit', a 'display unit', or by other terms having an equivalent technical meaning.

According to an embodiment, the communication interface 150 may provide a wired/wireless communication interface enabling communication with an external device. The communication interface 150 may include at least one of a wired Ethernet, a wireless LAN communication interface, or a short-range communication interface. The wireless LAN communication interface may include, e.g., Wi-Fi, and may support the wireless LAN standard (IEEE802.11x) of the institute of electrical and electronics engineers (IEEE). The wireless LAN communication interface may be wirelessly connected to an access point (AP) under the control of the processor 110. The short-range communication interface may perform short-range communication wirelessly with an external device under the control of the processor 110. Short-range communication may include Bluetooth, Bluetooth low energy, infrared data association (IrDA), ultra-wideband (UWB), WiFi Direct, and near-field communication (NFC). The external device may include a server device and a mobile terminal (e.g., phone, tablet, etc.) providing, e.g., a video service.

According to an embodiment, the processor 110 may control at least one other component of the display device 100 and/or execute computation or data processing regarding communication by executing at least one instruction 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

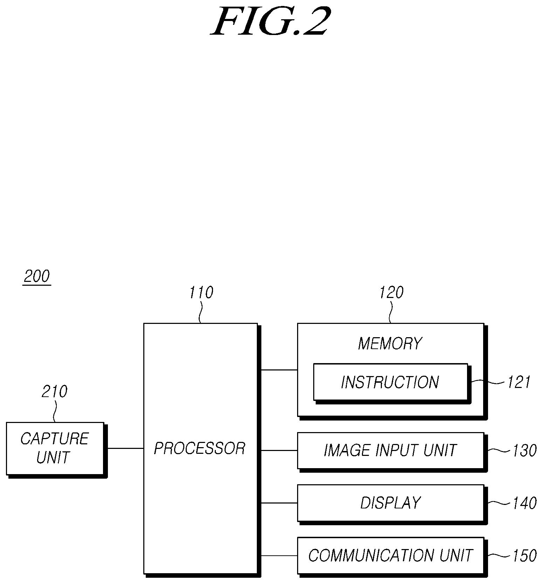

FIG. 2 is a block diagram illustrating a configuration of a display device according to an embodiment of the disclosure.

Referring to FIG. 2, a display device 200 may include a processor 110, memory 120, an image input interface 130, a display 140, a communication interface 150, and a capture unit (e.g., including capture circuitry) 210. As compared with the display device 100 of FIG. 1, the display device 200 of FIG. 2 may further include the capture unit 210. The processor 110, the memory 120, the image input interface 130, the display 140, and the communication interface 150 of the display device 200 of FIG. 2 may be described with reference to FIG. 1. No duplicate description thereof is presented below.

According to an embodiment, the processor 110 may generate a video image based on input video data input through the image input interface 130. According to an embodiment, the video image may correspond to a video frame.

According to an embodiment, the video image may be an image corresponding to a received image signal (e.g., a broadcast signal). For example, the video image may be a content image itself generated by converting a video signal corresponding to content into an image. For example, the video image may be a dynamic image constituting an image in which an object in a screen moves over time, but is not limited thereto.

According to an embodiment, the processor 110 may generate a graphic image based on input graphic data input through the image input interface 130. According to an embodiment, the graphic image may correspond to a graphic frame.

According to an embodiment, the graphic image may be an image displayed together with the video image. For example, the graphic image may be a static image constituting an image in which an object in the screen does not move over time, but is not limited thereto. According to an embodiment, the graphic image may be an image generated (or graphic processed) by the processor 110 (e.g., GPU) of the display device. According to an embodiment, the graphic image may include at least one graphic information. The graphic information may include at least one of, e.g., a user interface, menu information, configuration information, user guide information, electronic program guide information, or notification information.

According to an embodiment, the capture unit 210 may capture an image. For example, the capture unit 210 may capture a video image and/or a graphic image (e.g., a static image).

According to an embodiment, the capture unit 210 may store data of the captured image (hereinafter, a capture image) in memory (e.g., a capture buffer). For example, the capture unit 210 may store data of the captured video image (hereinafter, a capture video image) in a video capture buffer, and may store data of the captured graphic image (hereinafter, a capture graphic image) in a graphic capture buffer.

According to an embodiment, in the display device 200, the capture unit 210 may allocate a capture buffer for each capture image. For example, the display device 200 may allocate a video capture buffer for each capture video image, and may allocate a graphic capture buffer for each capture graphic image.

According to an embodiment, the capture unit 210 may include a hardware component and/or a software component. For example, the capture unit 210 may include a hardware component (e.g., a video capture driver) for capturing a video image and a software component for capturing a graphic image.

According to an embodiment, when a video image is captured using a hardware component (e.g., a video capture driver), the capture unit 210 may not capture all of the video images streamed in real time due to hardware performance limitations. For example, when the video image is streamed at 60 frames per second (FPS), the capture unit 210 may capture the video image with capture performance (e.g., capture performance of 15 times per second) lower than 60 times per second. In this case, the display device may interpolate video images (e.g., 45 video images per second) not captured through an interpolation function.

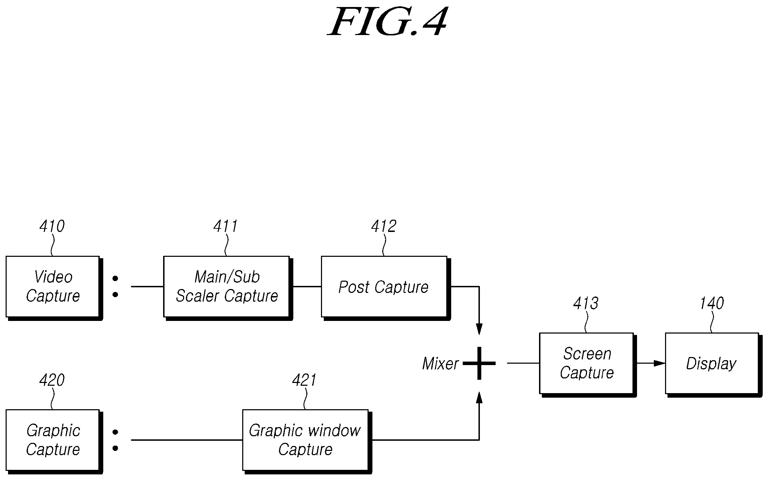

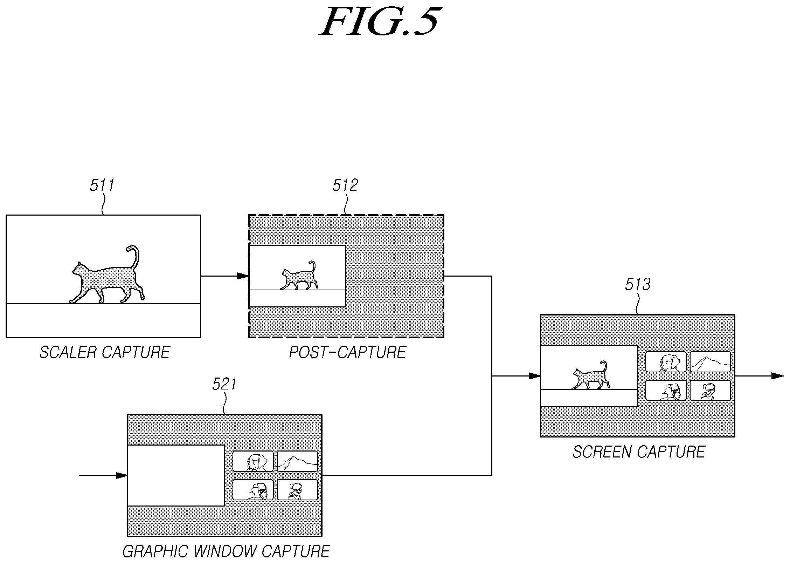

An example of an operation of the capture unit 210 is exemplarily described below with reference to FIGS. 4 and 5.

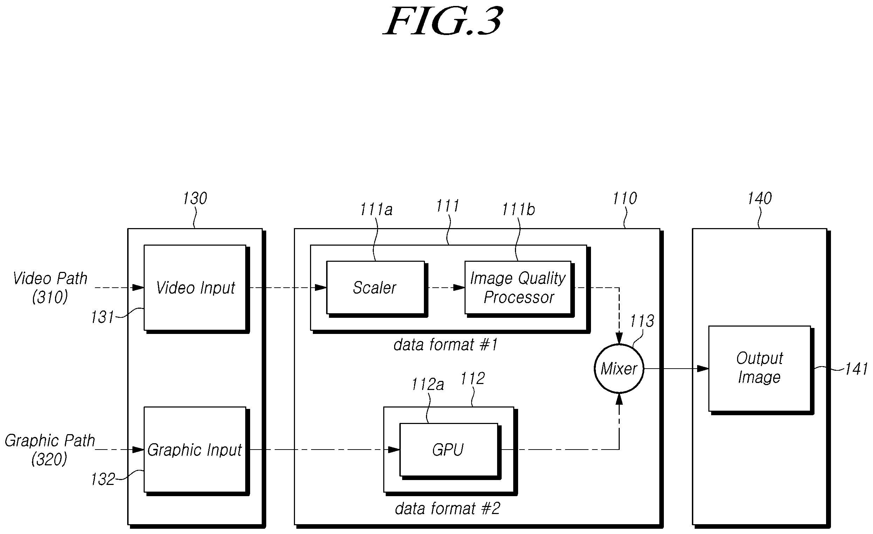

FIG. 3 is a view illustrating a procedure of processing video data and graphic data through a video path and a graphic path of a display device, respectively, according to an embodiment of the disclosure. The video path may refer to an image processing pathway for a sequence of moving video frames, whereas the graphic path may refer to an image processing pathway for a static image.

Referring to FIG. 3, a display device (e.g., the display device 100 of FIG. 1 or the display device 200 of FIG. 2) may generate a plurality of images, generate a synthesized image based on the generated plurality of images, and output the synthesized image. For example, the display device may generate a video image and a graphic image using input video data and input graphic data, respectively, generate a synthesized image based on the generated video image and graphic image, and output the synthesized image. According to an embodiment, the size of the synthesized image may be the same as the size of a screen displayed (or output) through the display 140.

According to an embodiment, the video image may be an image corresponding to a received image signal (e.g., a broadcast signal). For example, the video image may be a content image itself generated by converting a video signal corresponding to content into an image. For example, the video image may be a dynamic image constituting an image in which an object in a screen moves over time.

According to an embodiment, the graphic image may be an image displayed together with the video image. For example, the graphic image may be a static image constituting an image in which an object in the screen does not move over time. For example, the graphic image may be an image generated by the processor 110 (e.g., GPU) of the display device. According to an embodiment, the graphic image may include at least one graphic information. The graphic information may include at least one of, e.g., a user interface, menu information, configuration information, user guide information, electronic program guide information, or notification information.

According to an embodiment, the display device 200 may generate and/or process a video image and a graphic image through separate paths or pipelines, respectively. For example, the display device 200 may generate and/or process a video image on a video plane through the video path 310, and may generate and/or process a graphic image on a graphic plane through the graphic path 320.

According to an embodiment, the video plane may be a plane for supporting generation and/or processing of the video image. For example, the video plane may support generation and/or processing of a video image having a first data format (e.g., a YUV data format). Here, the first data format may be a data format that does not include an element indicating transparency (hereinafter, referred to as a transparency element). For example, the first data format may be a YUV data format, but is not limited thereto. Here, the YUV data format is one of video data formats and includes a luma (Y) component indicating brightness information, a chroma blue (U) component indicating blue difference information, and a chroma red (V) component indicating red difference information.

According to an embodiment, the graphic plane may be a plane for supporting generation and/or processing of the graphic image. For example, the graphic plane may support processing and/or generation of a graphic image having a second data format different from the first data format of the video plane. Here, the second data format may be a data format including a transparency element. For example, the second data format may be an RGBA data format, but is not limited thereto. Here, the RGBA data format is one of data formats indicating color information, and includes a red (R) component indicating a red color component, a green (G) component indicating a green component, a blue (B) component indicating a blue color component, and an alpha (A) component indicating transparency. The respective values of the components may range, e.g., from 0 to 255. For example, the alpha value may range from 0 to 255, 0 may indicate complete transparency, and 255 may indicate complete opacity.

According to an embodiment, the video plane including the video image may have a different layer from the graphic plane including the graphic image. For example, the video plane may be a lower layer of the graphic plane. For example, when generating a synthesized image, the video image (or video plane) may be positioned below the graphic image (or graphic plane).

The generation and/or processing of the video image through the video path 310 may be performed by the video input interface (e.g., including video input circuitry) 131 and the video processor 111.

According to an embodiment, the video input interface 131 may be included in the image input interface 130.

According to an embodiment, the video input interface 131 may obtain input video data. For example, the video input interface 131 may obtain input data from an image signal received from a broadcasting server. The input video data may include, e.g., data (e.g., video pixel data) for generating at least one video image, but is not limited thereto.

According to an embodiment, the video processor 111 may be included in the processor 110. In the disclosure, an operation of the video processor 111 may be understood as an operation of the processor 110.

According to an embodiment, the video processor 111 may generate a video image based on the input video data. For example, the video processor 111 may generate at least one video image on the video plane based on the video pixel data.

According to an embodiment, when it is necessary to generate a plurality of video images, the video processor 111 may generate video images on a plurality of video planes, respectively. When the video images are generated on the plurality of video planes, different image settings (e.g., resolution, size/position, size/position of the window including the video image, etc.) may be applied to each video plane. The plurality of video planes may have different layers.

According to an embodiment, the video processor 111 may include a scaler 111a and/or an image quality processor 111b. The video image generated on the video plane by the video processor 111 may be processed by the scaler 111a and/or the image quality processor 111b.

According to an embodiment, the scaler 111a may perform scaling processing on the video image. The scaling processing may include adjusting the size and/or position of the video image. For example, the scaling processing may include adjusting the size or resolution of the video image. For example, the scaling processing may include increasing or decreasing the size of the video image, or increasing or decreasing the resolution of the video image. For example, the scaling processing may include adjusting the position of the video image. For example, the scaling processing may include adjusting the position of the video image whose size or resolution is adjusted.

According to an embodiment, the scaler 111a may perform scaling processing on the video image so that the area where the video image is displayed in the synthesized image corresponds to a partial area (e.g., a transparentized area) of the graphic image associated with the video image. For example, the scaler 111a may scale the video image so that the area where the video image is displayed in the synthesized image matches the partial area of the graphic image associated with the video image. For example, the scaler 111a may scale the video image so that the area where the video image is displayed in the synthesized image is included in the partial area of the graphic image associated with the video image. The graphic image associated with the video image may be, e.g., a graphic image used to generate a synthesized image together with the video image.

According to an embodiment, the scaler 111a may scale the video image, based on the scaling configuration information received from the graphic processor 112 (or the GPU 112a). The scaling configuration information may include a scaling factor and/or a position adjustment value. The scaling factor may be a ratio indicating how much the size of the video image is to be adjusted. For example, the scaling factor may be a value representing a relative size change with respect to the original size. If the scaling factor is less than 1, the size may be reduced, and if the scaling factor is larger than 1, the size may be enlarged. For example, when the scaling factor is 2, the scaler 111a may enlarge the video image twice as large as the original size.

According to an embodiment, the image quality processor 111b may perform image quality processing on the video image (or the scaled video image). The image quality processing may include an operation for enhancing the image quality of the video image. For example, the image quality processing may include, but is not limited to, a contrast and brightness adjustment operation, a color correction operation, a sharpness enhancement operation, a tone mapping operation, a filter and an effect application operation, and/or a noise removal operation.

In the embodiment of FIG. 3, it is exemplified that the operation of the image quality processor 111b is performed after the operation of the scaler 111a, but embodiments are not limited thereto. For example, if necessary, the operation of the image quality processor 111b may be performed prior to the operation of the scaler 111a. Further, if necessary, at least one of the operations of the scaler 111a and the image quality processor 111b for a specific video image may be omitted.

The generation and processing of the graphic image through the graphic path 320 may be performed by the graphic input interface (e.g., including graphic input circuitry) 132 and the graphic processor 112.

According to an embodiment, the graphic input interface 132 may be included in the image input interface 130.

According to an embodiment, the graphic input interface 132 may obtain input graphic data. For example, the graphic input interface 132 may receive input graphic data generated by at least one application of the display device. The input graphic data may include, e.g., data (e.g., graphic pixel data) for generating at least one graphic image.

According to an embodiment, the graphic processor 112 may be included in the processor 110. In the disclosure, an operation of the graphic processor 112 may be understood as an operation of the processor 110. According to an embodiment, the graphic processor 112 may include a GPU 112a.

According to an embodiment, the graphic processor 112 (or the GPU 112a) may generate a graphic image based on input graphic data. For example, the graphic processor 112 (or the GPU 112a) may generate at least one graphic image on the graphic plane based on the graphic pixel data.

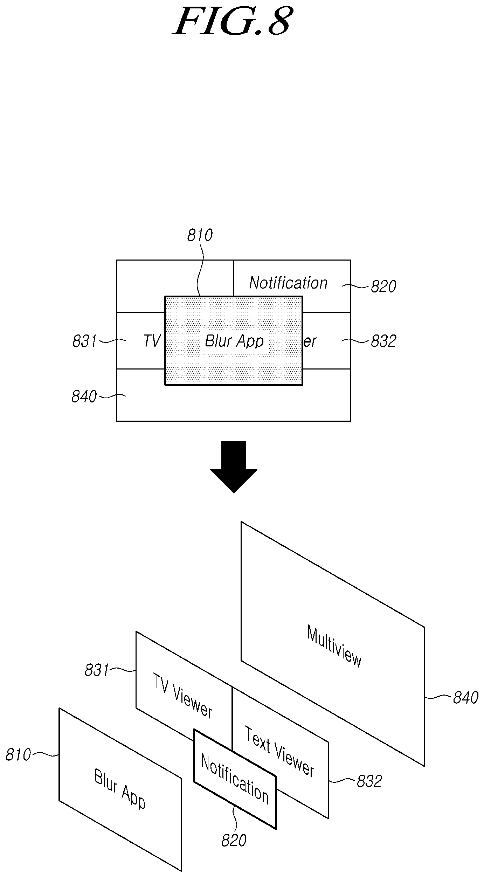

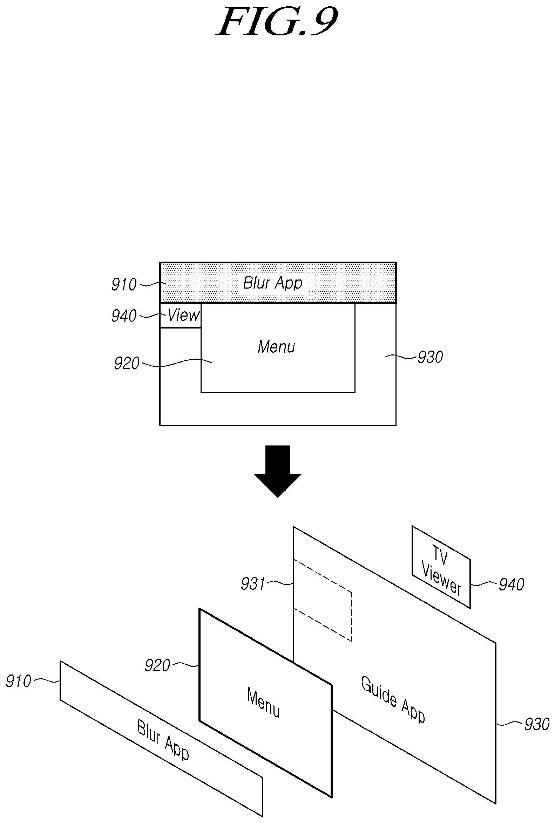

According to an embodiment, when a plurality of graphic images need to be generated (e.g., the multi-window case of FIG. 8 or 9), the graphic processor 112 (or the GPU 112a) may generate graphic images on the plurality of graphic planes, respectively. When graphic images are generated on the plurality of graphic planes, different image settings (e.g., resolution, size/position, size/position of the window including the graphic image, etc.) may be applied to each graphic plane. The plurality of graphic planes may have different layers.

According to an embodiment, the graphic processor 112 (or the GPU 112a) may generate scaling configuration information for the video image associated with the graphic image and transmit the scaling configuration information to the scaler 111a.

According to an embodiment, the display device may generate a synthesized image, based on the video image and the graphic image. For example, the display device may generate the synthesized image by mixing the video image and the graphic image using a mixer 113. For example, the display device may generate the synthesized image by overlaying the video image and the graphic image. For example, the display device may generate the synthesized image by disposing the video image (e.g., the scaled video image) below the graphic image. In this case, the area where the scaled video image is displayed may correspond to a partial area (e.g., a transparentized area) of the graphic image. Accordingly, even if the video image is disposed below the graphic image in the synthesized image, the video image may be visible to the user of the display device.

According to an embodiment, the display 140 may display the synthesized image as the output image 141. The output image 141 is an image visually recognized by the user of the display device and may be an image included in the screen of the display 140.

FIG. 4 is a view illustrating a capture operation of a display device according to an embodiment of the disclosure. FIG. 5 is a view illustrating an image obtained through a capture operation of a display device according to an embodiment of the disclosure.

Referring to FIGS. 4 and 5, a display device (e.g., the display device 100 of FIG. 1 or the display device 200 of FIG. 2) may capture an image. According to an embodiment, the capture operation of FIG. 4 may be performed by a capture unit (e.g., the capture unit 210 of FIG. 2) or a processor (e.g., the processor 110 of FIG. 1/2) of the display device.

According to an embodiment, the display device may capture the video image (hereinafter, referred to as video capture 410) and/or capture the graphic image (hereinafter, referred to as graphic capture 420).

According to an embodiment, the video capture 410 may be performed on a video path (e.g., the video path 310 of FIG. 3) (or a video plane), and the graphic capture 420 may be performed on a graphic path (e.g., the graphic path 320 of FIG. 3) (or a graphic plane).

According to an embodiment, the video capture 410 may include a main/sub-scaler capture operation 411, a post-capture operation 412, and/or a screen capture operation 413. According to an embodiment, the graphic capture 420 may include a graphic window capture operation 421.

According to an embodiment, the capture image obtained through the video capture 410 may have a data format (e.g., a YUV data format) of the video image. For example, the capture image obtained through the main/sub-scaler capture operation 411, the post-capture operation 412, and the screen capture operation 413 may have a YUV data format. According to an embodiment, the capture image obtained through the graphic capture 420 may have a data format (e.g., RGBA data format) of the graphic image. For example, the capture image obtained through the graphic window capture operation 421 may have an RGBA data format.

According to an embodiment, the display device may perform at least one of the main/sub-scaler capture operation 411, the post-capture operation 412, or the screen capture operation 413 on the video path. For example, the display device may bypass the main/sub-scaler capture operation 411 and the post-capture operation 412 and may perform the screen capture operation 413 on the video path. For example, the display device may bypass the main/sub-scaler capture operation 411 and the screen capture operation 413 and may perform the post-capture operation 412 on the video path.

According to an embodiment, the display device may optionally perform the graphic window capture operation 421 on the graphic path. For example, when the screen capture operation 413 is performed on the video path, the display device may not perform the graphic window capture operation 421 on the graphic path.

According to an embodiment, main/sub-scaler capture may be a capture method for the video image before scaling by a scaler (e.g., the scaler 111a of FIG. 3) is performed. The video image before the scaling is performed may be, e.g., the video image itself generated based on the input video data. Since the video image is a video image before scaling is performed, it may be, e.g., a video image displayed in the entire area of the screen.

According to an embodiment, in the main/sub-scaler capture operation 411, the display device may obtain the scaler capture image by capturing the video image before the scaling is performed using the main/sub-scaler capture method. An example of the scaler capture image may be the same as the scaler capture image 511 of FIG. 5. As illustrated in FIG. 5, the scaler capture image 511 may include a video image displayed in the entire area of the screen.

According to an embodiment, the data of the scaler capture image may be stored in a buffer (hereinafter, referred to as a scaler buffer) corresponding to the main/sub-scaler capture operation 411. The scaler capture image stored in the scaler buffer may be used for scaling by the scaler. In the disclosure, the main/sub-scaler capture 411 may be referred to as scaler capture.

According to an embodiment, post-capture may be a capture method for the video image after scaling by a scaler (e.g., the scaler 111a of FIG. 3) is performed. The video image after the scaling is performed may be, e.g., a video image generated by adjusting the position and/or size of the video image generated based on the input video data. Since the video image is a video image after scaling is performed, the video image may be, e.g., a video image displayed in a partial area of the entire area of the screen.

According to an embodiment, in the post-capture operation 412, the display device may obtain the post-capture image by capturing the video image after the scaling is performed using the post-capture method. An example of a post-capture image may be the same as the post-capture image 512 of FIG. 5. As illustrated in FIG. 5, the post-capture image 512 may include a video image displayed in a partial area of the screen.

According to an embodiment, the data of the post-capture image may be stored in a buffer (hereinafter, a post-capture buffer) corresponding to the post-capture operation 412. The post-capture image stored in the post-capture buffer may be used for synthesis with the graphic image.

According to an embodiment, graphic window capture may be a capture method for the graphic image (or the window including the graphic image).

According to an embodiment, in the graphic window capture operation 421, the display device may obtain the graphic window capture image by capturing the graphic image (or the window including the graphic image) using the graphic window capture method. An example of the graphic window capture image may be the same as the graphic window capture image 521 of FIG. 5. As illustrated in FIG. 5, the graphic window capture image may correspond to a graphic image included in one window (or graphic plane).

According to an embodiment, the data of the graphic window capture image may be stored in a buffer corresponding to the graphic window capture operation 421 (hereinafter, referred to as a graphic window capture buffer). The graphic window capture image stored in the graphic window capture buffer may be used for synthesis with the post image.

Meanwhile, when a plurality of graphic images are provided on one screen through a plurality of windows (or graphic planes) (e.g., the multi-window case of FIG. 8 or 9), the display device may capture only one window through the graphic window capture operation 421 due to the performance limitation of the window system. For example, the display device may capture only a window corresponding to a layer immediately below a window (or a graphic plane) in which information about a specific application (e.g., a blur app) associated with the graphic window capture operation 421 is displayed. In other words, windows positioned in the layers below the captured window may not be captured. In other words, in the multi-window case, when the graphic window capture operation 421 is used, the image in which the graphic images are synthesized may not be captured.

According to an embodiment, screen capture may be the capture method for the synthesized image generated based on the video image and the graphic image. According to an embodiment, screen capture may be a method of capturing an entire screen. For example, screen capture may be a method of capturing an entire screen including the synthesized image. The synthesized image may be generated by mixing, e.g., the video image and at least one graphic image associated with the video image using a mixer (e.g., the mixer 113 of FIG. 3).

According to an embodiment, in the screen capture operation 413, the display device may obtain the screen capture image by capturing the synthesized image using the screen capture method. In the disclosure, the screen capture image may be referred to as a screen shot image. An example of the screen capture image may be the same as the screen capture image 513 of FIG. 5. As illustrated in FIG. 5, the screen capture image 513 may include a synthesized image (or an entire screen image including the synthesized image) generated by synthesizing the post-capture image 512 and the graphic window capture image 521. In the synthesized image, the area where the scaled video image is displayed may correspond to the transparentized area of the graphic window.

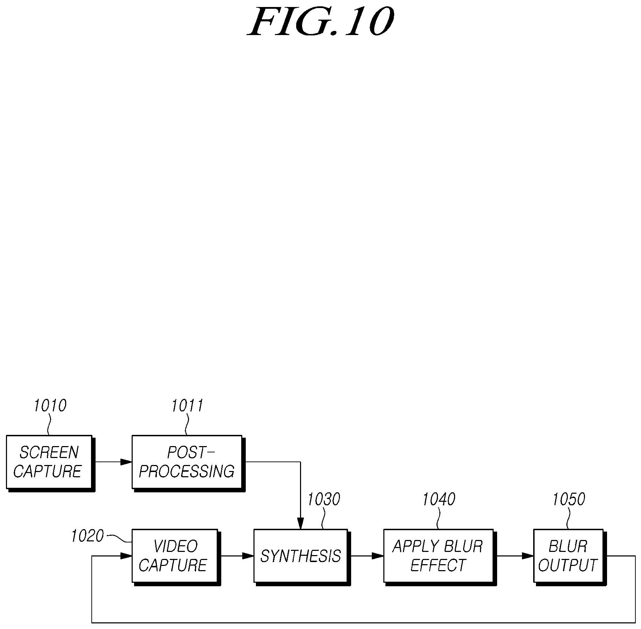

According to an embodiment, the data of the screen capture image may be stored in a buffer (hereinafter, a screen capture buffer) corresponding to the screen capture operation 413. The screen capture image stored in the screen capture buffer may be post-processed and used for synthesis with the post-capture image. Post-processing of the screen capture image and synthesis of the screen capture image with the post-capture image are described below with reference to FIGS. 10 to 13.

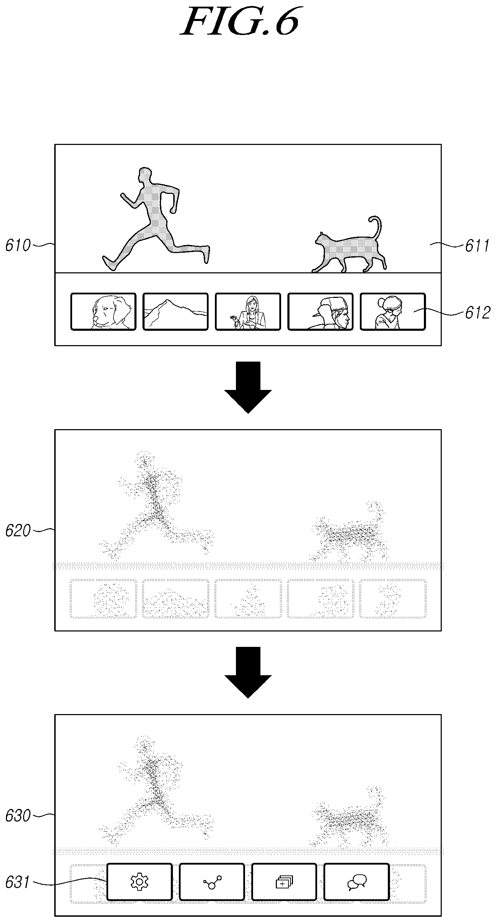

FIG. 6 illustrates a change in an output image according to execution of an application supporting image effect processing, according to an embodiment of the disclosure.

According to an embodiment, the image effect processing may be blurring. According to an embodiment, the blurring may include an operation of applying a blur effect (hereinafter, referred to as a blur effect application operation) and/or an operation of outputting information associated with a blur app (hereinafter, referred to as a blur output operation). The blur effect may be, e.g., an effect of softening or blurring at least a partial area of the image. For example, the blur effect may be an effect of blurring the entire area of an image (e.g., the first image 610) or a screen to which the blur effect is applied. Through the blur effect, details in the image may be hidden, or matters displayed on the blur-effect-processed image may be highlighted.

Hereinafter, various embodiments of the disclosure are described using blurring as an example of image effect processing, but the disclosure is not limited thereto. For example, various embodiments of the disclosure may also be applied to filtering, mosaic effect processing, averaging, or other processing for blurring an image. In the disclosure, an application supporting blurring may be referred to as a blur app or a blur application.

According to an embodiment, a display device (e.g., the display device 100 of FIG. 1 or the display device 200 of FIG. 2) may start blurring based on identifying an event related to blurring. For example, the display device may start blurring in response to execution of the blur app.

According to an embodiment, the blurring may be performed by a processor (e.g., the processor 110 of FIG. 1/2) or a GPU (e.g., the GPU 112a of FIG. 3) of the display device.

Referring to FIG. 6, the first image 610 corresponds to a synthesized image generated based on the video image 611 and the first graphic image 612.

The second image 620 corresponds to an image to which a blur effect for the first image 610 is applied. According to an embodiment, the display device may apply the blur effect to the image by mixing the pixel value of the image and neighboring pixel values and setting the mixed pixel value as a new pixel value.

According to an embodiment, when the blur app is executed while the first image 610 is displayed, the display device may generate a second image 620 by applying a blur effect to the first image 610. For example, in response to the blur app being executed while the first image 610 is displayed, the display device may generate the second image 620 by applying a blur effect to the first image 610. In the disclosure, the second image 620 to which the blur effect is applied may be referred to as a blur image.

The third image 630 corresponds to an image in which the second graphic image 631 associated with the blur app is displayed on the second image 620. For example, when the blurred second image 620 is normally generated, the display device may display the second graphic image 631 associated with the blurred app on the second image. According to an embodiment, the second graphic image 631 may include at least one piece of graphic information. The at least one graphic information may include at least one of, e.g., menu information, configuration information (e.g., graphic window configuration information), user guide information, electronic program guide information, or notification information. According to an embodiment, the graphic information may be generated by a processor (e.g., the processor 110 of FIG. 1/2) (or a GPU (e.g., the GPU 112a of FIG. 3)).

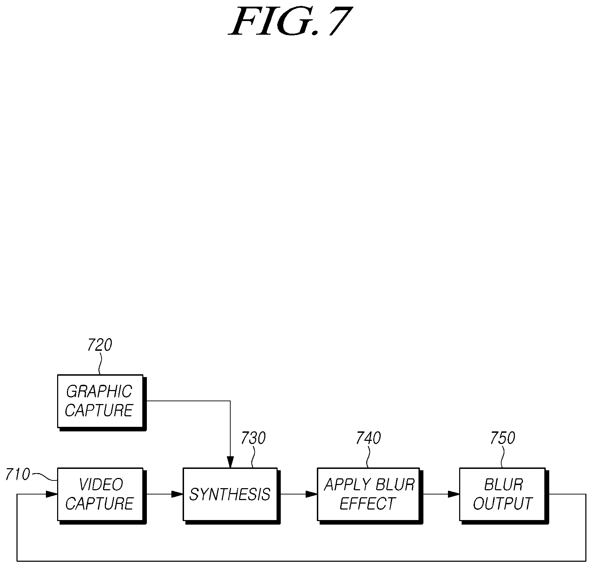

FIG. 7 is a view illustrating a blurring procedure according to an embodiment of the disclosure. FIG. 8 is a view illustrating a result of blurring according to a blurring procedure in a multi-window case, according to an embodiment of the disclosure. FIG. 9 is a view illustrating a result of blurring according to a blurring procedure in a multi-window case, according to an embodiment of the disclosure.

Referring to FIG. 7, in operation 710, a display device (e.g., the display device 100 of FIG. 1 or the display device 200 of FIG. 2) may perform video capture (e.g., the video capture 410 of FIG. 4) on a first video image. For example, the display device may obtain a post-capture image (e.g., the post-capture image 512 of FIG. 5) by performing a post-capture operation (e.g., the post-capture operation 412 of FIG. 4) on the scaled first video image.

In operation 720, the display device may perform graphic capture (e.g., the graphic capture 420 of FIG. 4) on the graphic image. For example, the display device may obtain a graphic window capture image (e.g., the graphic window capture image 521 of FIG. 5) by performing graphic window capture operation (e.g., the graphic window capture 421) on the graphic image. Operation 720 may be performed in parallel with operation 710. For example, operation 720 may be performed simultaneously with or together with operation 710.

In operation 730, the display device may generate a first synthesized image, based on the post-capture image and the graphic window capture image. For example, the display device may generate the first synthesized image by mixing the post-capture image and the graphic window capture image using a mixer (e.g., the mixer 113 of FIG. 3). For example, the display device may generate the first synthesized image by overlaying the post-capture image and the graphic window capture image. For example, the display device may generate a synthesized image by disposing the post-capture image under the graphic window capture image. In this case, the area where the video image is displayed in the post-capture image may correspond to a partial area (e.g., a transparentized area) of the graphic image. Accordingly, even if the video image is disposed below the graphic image in the synthesized image, the video image may be visible to the user of the display device. The first synthesized image may be, e.g., the same image as the screen capture image 513 of FIG. 5.

In operation 740, the display device may perform a blur effect application operation to the first synthesized image. In operation 750, the display device may perform a blur output operation on the blur effect-applied first synthesized image. For the description of the blur effect application operation and the blur output operation and the description of the resulting image, the description of FIG. 6 may be referred to. No duplicate description thereof is presented below.

Thereafter, the display device may repeatedly perform operations 710 to 750 on the video image(s) following the first video image. The video image(s) following the first video image may be, e.g., video image(s) configured to be displayed temporally later than the first video image. For example, the video image(s) following the first video image may be video image(s) that belong to the same video stream as the first video image and are configured to be displayed temporally later than the first video image. In this case, the graphic window capture image obtained through operation 720 described above may be used in the same manner for the associated video image(s) without changing. As such, the graphic image obtained through one graphic window capture may be repeatedly used in the associated video images to blur the real-time video image. The associated video images may be, e.g., video images configured to be sequentially displayed on one screen together with the graphic window capture image.

Meanwhile, as described above, the graphic capture method (e.g., the graphic window capture method) may capture only one window (or graphic plane) due to limitations of software performance (e.g., window system performance). For example, the display device may capture only a window (or a graphic plane) corresponding to a layer immediately below the layer associated with the blur app through graphic window capture. In other words, windows positioned in the layers below the captured window may not be captured.

For example, as illustrated in FIG. 8, a plurality of graphic images may be configured to be provided on one screen through a plurality of windows (or graphic planes) (multi-window case). For example, a first window 810 providing information associated with a blur app, a second window 820 positioned in a lower layer of the first window 810 and providing a notification, a 3-1th window 831 and a 3-2th window 832 positioned in a lower layer of the second window 820 and respectively providing a TV viewer and a text viewer, and a fourth window 840 positioned in a lower layer of the 3-1th window 831 and the 3-2th window 832 and providing a multi-view may be configured to be provided through one screen. In this case, the display device may capture only the second window 820 (or a graphic image (e.g., a graphic image including a notification) included in the second window 820) positioned in a layer immediately below the first window 810 among the plurality of windows. In this case, the second window 820 corresponds to a window that is not displayed in the entire area of the screen, but is displayed in a partial area. Therefore, when the blur effect is applied to the corresponding window, the blur effect is not applied to the entire screen as originally intended, but only to a partial area of the entire screen. Therefore, in the multi-window case, the originally intended blurring result may not be provided.

For example, as illustrated in FIG. 9, a plurality of graphic images may be configured to be provided on the screen through a plurality of windows (or graphic planes) (multi-window case). For example, a first window 910 providing information associated with a blur app, a second window 920 positioned in a lower layer of the first window 910 and providing a menu, a third window 930 positioned in a lower layer of the second window 920 and providing a guide app including a transparent hole 931, and a fourth window 940 positioned in a lower layer of the third window 930 and providing a TV viewer may be configured to be provided through one screen. In this case, the display device may capture only the second window 920 (or a graphic image (e.g., a graphic image providing a menu) included in the second window 920) positioned in a layer immediately below the first window 910 among the plurality of windows. In this case, the second window 920 corresponds to a window that is not displayed in the entire area of the screen, but is displayed in a partial area. Therefore, when the blur effect is applied to the corresponding window, the blur effect is not applied to the entire screen as originally intended, but only to a partial area of the entire screen. Therefore, in the multi-window case, the originally intended blurring result may not be provided.

As described above, when the blurring is applied using the synthesized image based on the graphic window capture image, the blurring result for the entire screen as originally intended in the multi-window case may not be provided. Therefore, even in the multi-window case, there is a need for a new type of blurring procedure capable of providing a blurring result for the entire screen as originally intended. The new blurring procedure may be, e.g., a procedure using a screen capture image.

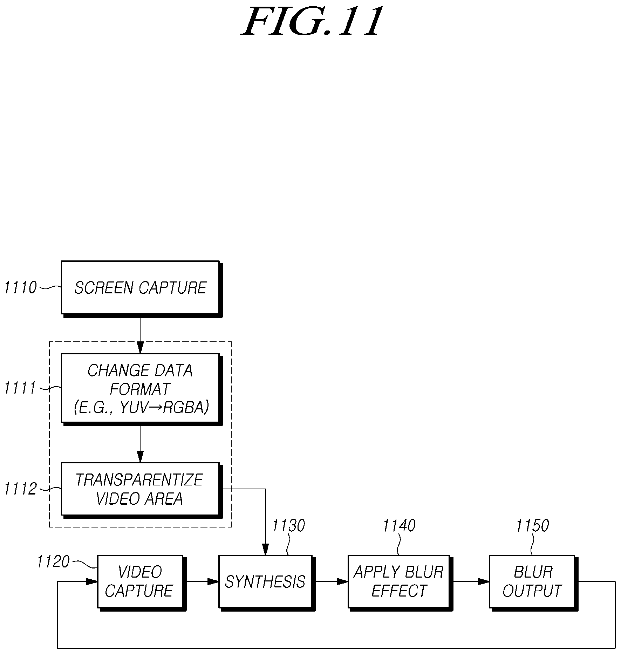

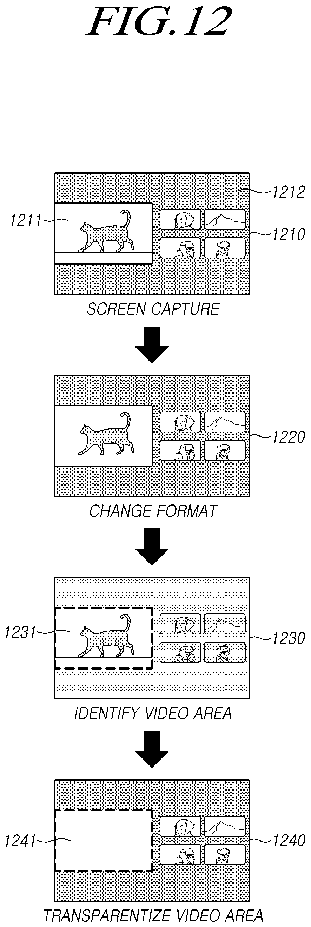

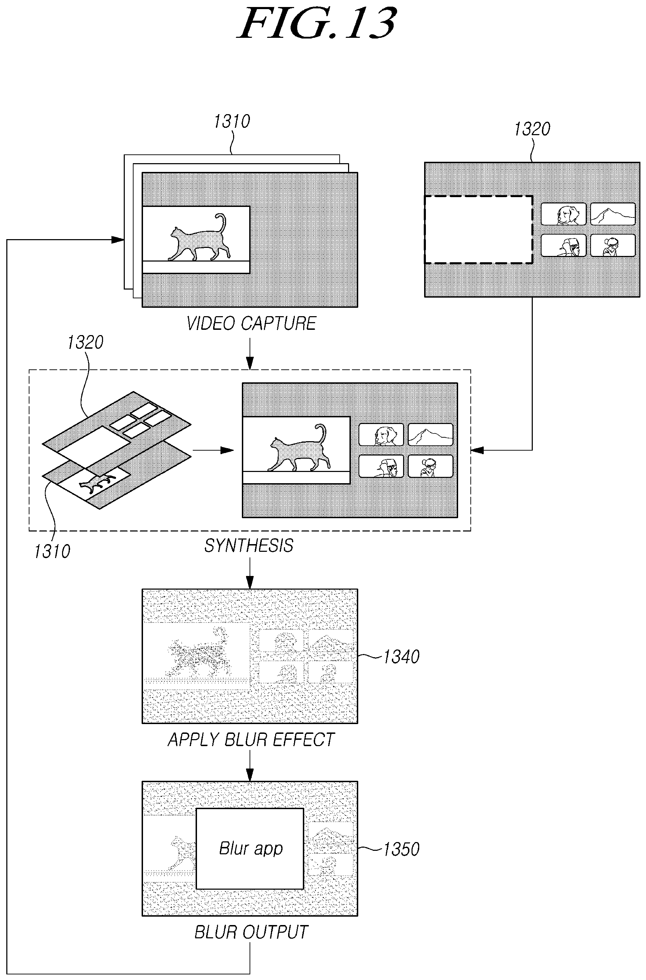

FIG. 10 is a view illustrating a blurring procedure according to an embodiment of the disclosure. FIG. 11 is a view illustrating a blurring procedure according to an embodiment of the disclosure. FIG. 12 illustrates a change in an image as a result of processing a screen capture image in a blurring procedure, according to an embodiment of the disclosure. FIG. 13 illustrates an image obtained in a blurring procedure, according to an embodiment of the disclosure.

According to an embodiment, a display device (e.g., the display device 100 of FIG. 1 or the display device 200 of FIG. 2) may start a blurring procedure based on identifying an event related to blurring. For example, the display device may start operation 1010 in response to execution of the blur app.

Referring to FIGS. 10 and 11, in operations 1010 and 1110, the display device may perform a screen capture operation (e.g., the screen capture operation 413 of FIG. 4) on the first synthesized image.

According to an embodiment, operations 1010 and 1110 may be performed before the blur app (or graphic information related to the blur app) is displayed on the screen. For example, operations 1010 and 1110 may be performed after the blur app is executed and before the blur app is displayed on the screen. When screen capture is performed after the blur app is displayed on the screen, because the blur app is included in the screen capture image together with the first synthesized image, it is not possible to apply the blur effect to lower layers of the blur app.

According to an embodiment, the display device may obtain a screen capture image (e.g., the screen capture image 513 of FIG. 5 or the screen capture image 1210 of FIG. 12) by capturing the first synthesized image using the screen capture method. Data of the obtained screen capture image may be stored in the screen capture buffer.

According to an embodiment, the first synthesized image may be generated based on the first video image and at least one graphic image. For example, the first synthesized image may be generated by mixing the first video image and at least one graphic image. For example, the first synthesized image may be generated by overlaying the first video image and at least one graphic image.

According to an embodiment, the first video image may be a scaled video image. For example, the first video image may be a video image scaled by a scaler (e.g., the scaler 111a of FIG. 3). The scaling is described with reference to FIG. 3. No duplicate description thereof is presented below.

According to an embodiment, the at least one graphic image may be associated with the first video image. For example, the at least one graphic image may be a graphic image configured to be displayed as one screen together with the first video image (or each video image in the first video image group including the first video image).

According to an embodiment, the at least one graphic image may include a first graphic image (e.g., a graphic image of the second window 920 of FIG. 9) and a second graphic image (e.g., a graphic image of the third window 930 of FIG. 9).

According to an embodiment, the first graphic image and the second graphic image may be generated on different graphic planes. For example, the first graphic image may be generated on the first graphic plane, and the second graphic image may be generated on the second graphic plane, which is a lower graphic plane of the first graphic plane.

According to an embodiment, the first graphic image and the second graphic image may be provided on different windows. For example, the first graphic image may be provided through the first window, and the second graphic image may be provided through the second window. According to an embodiment, the first window and the second window may be present on the same graphic plane or may be present on different graphic planes.

According to an embodiment, the screen capture image may include a video area corresponding to the first video image and a graphic area corresponding to at least one graphic image associated with the first video image. For example, as illustrated in FIG. 12, the first image 1210 may include a video area 1211 corresponding to the first video image and a graphic area 1212 corresponding to at least one graphic image associated with the first video image.

According to an embodiment, the screen capture image may have a first data format. The first data format may be a data format that does not include a transparency element indicating transparency. For example, the first data format may be a YUV data format, but is not limited thereto.

In operation 1011, the display device may perform post-processing on the screen capture image. According to an embodiment, the post-processing operation for the screen capture image may include an operation for transparentizing the video area in the screen capture image.

According to an embodiment, the video area in the screen capture image may be associated with the first video image. For example, the video area in the screen capture image may be the same as the area where the first video image is displayed. For example, the video area in the screen capture image may include an area where the first video image is displayed.

According to an embodiment, when the screen capture image has the first data format that does not include a transparency element, the display device may perform operation 1111 and operation 1112 of FIG. 11.

In operation 1111, the display device may change the data format for the screen capture image from the first data format to the second data format including the transparency element. For example, the display device may change the data format of the screen capture image from the first data format to the second data format including the transparency element, before transparentizing the video area. The second data format may be a data format including a transparency element. For example, the second data format may be an RGBA data format, but is not limited thereto. An example of the format changed screen capture image may be the same as the second image 1220 of FIG. 12. Since only the format of the data is changed through processing of operation 1111, the first image 1210 and the second image 1220 correspond to the visually same image.

In operation 1112, the display device may transparentize the video area in the screen capture image. For example, after the data format is changed, the display device may identify the video area in the screen capture image and adjust the value of the transparency element for the video area in the screen capture image based on the data in the second data format,, thereby transparentizing the video area. For example, the display device may transparentize the video area by adjusting the alpha value for pixels corresponding to the video area to 0 in the data of the second data format for the screen capture image. An example of the screen capture image in which the video area is identified may be the same as the third image 1230 of FIG. 12. An example of the screen capture image including the transparentized video area may be the same as the fourth image 1240 including the transparentized video area 1241 of FIG. 12.

According to an embodiment, when the screen capture image has the second data format including the transparency element, the display device may identify the video area in the screen capture image and adjust the value of the transparency element for the video area in the screen capture image based on the data of the second data format without changing the data format,, thereby transparentizing the video area. For example, the display device may transparentize the video area by adjusting the alpha value for the pixel values corresponding to the video area in the data of the second data format for the screen capture image to 0.

According to an embodiment, the data of the post-processed screen capture image may be stored in the screen capture buffer. For example, data of the screen capture image in which the video area is transparentized may be stored in the screen capture buffer.

In operations 1020 and 1120, the display device may perform video capture (e.g., the video capture 410 of FIG. 4) on the second video image. According to an embodiment, the second video image may be the same video image as the first video image used to obtain the screen capture image, or may be a video image following the first video image (e.g., one of video images in the first video image group including the first video image). The second video image may be, e.g., a graphic image configured to be displayed as one screen together with at least one graphic image associated with the first video image.

According to an embodiment, the second video image may be a scaled video image. For example, the second video image may be a video image scaled by a scaler (e.g., the scaler 111a of FIG. 3). The scaling is described with reference to FIG. 3. No duplicate description thereof is presented below.

According to an embodiment, the display device may obtain a first video capture image (e.g., the first video capture image 1310 of FIG. 13) by capturing the second video image using a video capture method. For example, the display device may obtain the first post-capture image (e.g., the post-capture image 512 of FIG. 5) by capturing the second video image using the post-capture method. The data of the obtained first video capture image (e.g., the first post-capture image) may be stored in the video capture buffer (e.g., the post-capture buffer). The data of the first video capture image stored in the video capture buffer may be used to generate a synthesized image based on the first video capture image and the post-processed screen capture image, together with the data of the post-processed (e.g., video area-transparentized) screen capture image stored in the screen capture buffer.

In operations 1030 and 1130, the display device may perform synthesis on the first video capture image and the post-processed screen capture image.

According to an embodiment, the display device may generate a second synthesized image, based on the first video capture image (e.g., the first post-capture image) and the post-processed screen capture image (e.g., the video area-transparentized screen capture image). For example, the display device may generate the second synthesized image based on the first post-capture image and the video area-transparentized screen capture image. For example, the display device may generate the second synthesized image by synthesizing (or merging) the first post-capture image and the video area-transparentized screen capture image. For example, the display device may generate the second synthesized image by mixing the first post-capture image and the video area-transparentized screen capture image. For example, the display device may generate the second synthesized image by overlaying the first post-capture image and the video area-transparentized screen capture image.

For example, as illustrated in FIG. 13, the display device may generate the second synthesized image 1330 by disposing the first post-capture image 1310 below the video area-transparentized screen capture image 1320. In this case, the area where the video image is displayed in the post-capture image 1310 may correspond to a partial area (e.g., a transparent area) of the video area-transparentized screen capture image 1320. Accordingly, even if the video image is disposed below the graphic image in the synthesized image 1330, the video image may be visible to the user of the display device.

According to an embodiment, the layer of the video plane (or window) including the first video capture image (e.g., the first post-capture image) may be a lower layer of the layer of the plane (or window) including the post-processed screen capture image (e.g., the video area-transparentized screen capture image). According to an embodiment, the scaled second video image in the first video capture image (e.g., the first post-capture image) may be disposed in the transparentized video area in the second synthesized image. Accordingly, even if the first video capture image is set as a lower layer of the post-processed screen capture image, the scaled second video image in the first video capture image may be visible to the user of the display device through the transparentized video area.

In operations 1040 and 1140, the display device may perform a blur effect application operation on the second synthesized image 1330, generating the blur effect applied second synthesized image 1340. In operations 1050 and 1150, the display device may perform a blur output operation on the blur effect-applied second synthesized image 1340. The display device may output blur app image 1350 in which a graphic information associated with a blur app supporting the blurring is displayed on the blur effect-applied second synthesized image 1340. Accordingly, at least a portion of the blurred second synthesized image 1340 may be displayed on the display. For the description of the blur effect application operation and the blur output operation and the description of the resulting image, the description of FIG. 6 may be referred to. No duplicate description thereof is presented below.

Thereafter, the display device may repeatedly perform operations 1020 to 1050 (or operations 1120 to 1150) on the video image(s) following the second video image. The video image(s) following the second video image may be, e.g., video image(s) configured to be displayed temporally later than the second video image. For example, the video image(s) following the second video image may be video image(s) that belong to the same video stream as the first video image and the second video image and are configured to be displayed temporally later than the first video image and the second video image. In this case, the display device may use the post-processed screen capture image (or video area-transparentized screen capture image) obtained through operation 1011 (or operations 1111 and 1112) described above for the associated video image(s) without changing. The associated video image(s) may be a graphic image following the second video image and configured to be displayed as one screen, together with at least one graphic image associated with the first video image (or second video image). As such, the screen capture image obtained through one screen capture may be repeatedly used for associated video images to blur the real-time video image.

Unlike the blurring procedure using the graphic window capture method, in the blurring procedure using the screen capture method, the screen capture image obtained by capturing the entire screen including the synthesized image generated based on the video window and the associated graphic window is used for blurring. Such a screen capture image may include all of the graphic images of the multi-window. Accordingly, even when a plurality of graphic images are configured to be provided on one screen through a plurality of windows (or graphic planes) (multi-window case), a blur effect may be applied to the entire screen rather than to only one window. Therefore, the blur effect may be applied to the entire screen as originally intended even in the multi-window case.

For example, as shown in FIG. 8, a first window 810 providing information associated with a blur app, a second window 820 positioned in a lower layer of the first window 810 and providing a notification, a 3-1st window 831 and a 3-2th window 832 positioned in a lower layer of the second window 820 and providing a TV viewer and a text viewer respectively, and a fourth window 840 positioned in a lower layer of the 3-1st window 831 and the 3-2th window 832 and providing a multi-view may be configured to be provided through one screen. In this case, the screen capture image may include an entire screen image including all of the graphic images of the second window 820, the 3-1st window 831, the 3-2th window 832, and the fourth window 840. Accordingly, when the blur effect is applied to the corresponding screen capture image, the blur effect may be applied to the entire screen as originally intended. Therefore, even in the multi-window case, the originally intended blurring result may be provided.

For example, as shown in FIG. 9, a first window 910 providing information associated with a blur app, a second window 920 positioned in a lower layer of the first window 910 and providing a menu, a third window 930 positioned in a lower layer of the second window 920 and providing a guide app including a transparent hole 931, and a fourth window 940 positioned in a lower layer of the third window 930 and providing a TV viewer may be configured to be provided through one screen. In this case, the screen capture image may include an entire screen image including all of the graphic images of the second window 920, the third window 930, and the fourth window 940. Accordingly, when the blur effect is applied to the corresponding screen capture image, the blur effect may be applied to the entire screen as originally intended. Therefore, even in the multi-window case, the originally intended blurring result may be provided.

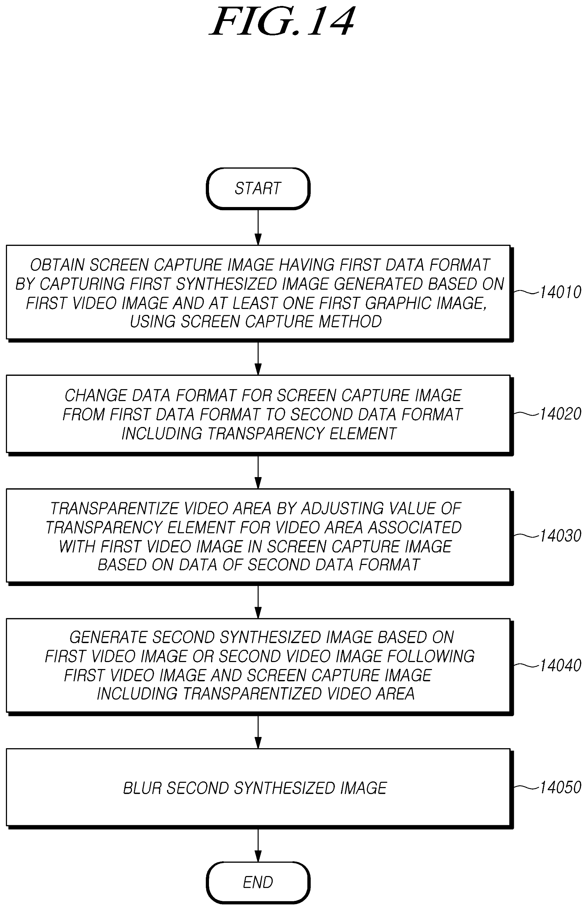

FIG. 14 is a flowchart illustrating a method by a display device according to an embodiment of the disclosure.

Referring to FIG. 14, the display device (e.g., the display device 100 of FIG. 1 or the display device 200 of FIG. 2) may obtain a screen capture image having a first data format by capturing a first synthesized image generated based on a first video image and at least one graphic image using a screen capture method (14010). According to an embodiment, the first data format may not include a transparency element indicating transparency.

The display device may change a data format for the screen capture image from the first data format to a second data format including the transparency element (14020).

The display device may transparentize a video area associated with the first video image in the screen capture image by adjusting a value of the transparency element for the video area, based on data of the second data format (14030).

The display device may generate a second synthesized image based on a screen capture image including the first video image or a second video image following the first video image and the transparentized video area (14040). According to an embodiment, an area where the first video image or the second video image is displayed in the second synthesized image may be included in the transparentized video area.

The display device may blur the second synthesized image (14050).

According to an embodiment, the at least one graphic image may include a first graphic image and a second graphic image, and a window including the first graphic image and a window including the second graphic image may be positioned in different layers.

According to an embodiment, obtaining the screen capture image may be performed before a blur application associated with the blurring or graphic information associated with the blur application is displayed on a screen.

According to an embodiment, the first data format may be a YUV data format, and the second data format may be an RGBA data format.

According to an embodiment, to transparentize the video area, the display device may adjust an alpha value of pixels corresponding to the video area to 0 in data of the second data format.

According to an embodiment, the second video image may correspond to a post-capture image obtained by capturing a video image scaled to be synthesized with the at least one graphic image using a video capture method, and the second video image may have the first data format.

According to an embodiment, the second synthesized image may be generated by positioning the second video image in a lower layer of a layer in which the screen capture image including the transparentized video area is positioned.

According to an embodiment, to blur the second synthesized image, the display device may apply a blur effect to the second synthesized image, and output graphic information associated with a blur application supporting the blurring on the blur effect-applied second synthesized image.

According to an embodiment of the disclosure, after blurring the second synthesized image, the display device may generate a third synthesized image by synthesizing a third video image following the second video image with the screen capture image including the transparentized video area, and blur the third synthesized image.

According to an embodiment, the at least one graphic image may be configured to be sequentially displayed on one screen with each of the first video image, the second video image, and the third video image.

According to an embodiment, the graphic image may include at least one piece of graphic information, and the at least one piece of graphic information may be included in a graphic area positioned outside the video area in the screen capture image, and may include at least one of a user interface, menu information, configuration information, user guide information, electronic program guide information, or notification information.

According to an embodiment of the disclosure, the first video image and the graphic image may have different data formats, and the first video image and the screen capture image may have the same data format.

According to an embodiment, the display device may identify an event related to the blurring, and obtain a screen capture image having the first data format, in response to identifying the event related to the blurring.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A display device, comprising:
a display;
at least one processor; and
memory storing at least one instruction that, when executed by the at least one processor, cause the display device to:
obtain a first screen capture image having a first data format by capturing a first synthesized image generated based on a first video image and at least one graphic image using a screen capture method, wherein the first data format does not comprise a transparency element indicating transparency;
change a data format for the first screen capture image from the first data format to a second data format comprising the transparency element;
transparentize a video area associated with the first video image in the first screen capture image by adjusting a value of the transparency element for the video area, based on data of the second data format;
generate a second synthesized image based on a second screen capture image comprising the transparentized video area and the first video image or a second video image following the first video image, wherein an area where the first video image or the second video image is displayed in the second synthesized image is in the transparentized video area;
blur the second synthesized image; and
control the display to display at least a portion of the blurred second synthesized image.

2. The display device of claim 1, wherein the at least one graphic image comprises a first graphic image and a second graphic image, and wherein a window comprising the first graphic image and a window comprising the second graphic image are positioned in different layers.

3. The display device of any one of claims 1 to 2, wherein the first data format is a YUV data format, and the second data format is an RGBA data format, and
wherein to transparentize the video area, the at least one instruction, when executed by the at least one processor, further cause the display device to adjust an alpha value of pixels corresponding to the video area to 0 in data of the second data format.

4. The display device of claim 1,
wherein the second video image corresponds to a post-capture image obtained by capturing a video image scaled for synthesis with the at least one graphic image using a video capture method, and
wherein the second video image has the first data format.

5. The display device of claim 3, wherein the second synthesized image is generated by positioning the second video image in a lower layer than a layer comprising the second screen capture image.

6. The display device of claim 1, wherein to blur the second synthesized image, the at least one instruction, when executed by the at least one processor, further cause the display device to:
apply a blur effect to the second synthesized image; and
output graphic information associated with a blur application supporting the blurring on the second synthesized image to which the blur effect is applied.

7. The display device of claim 1,
wherein, after blurring the second synthesized image, the at least one instruction, when executed by the at least one processor, further cause the display device to:
generate a third synthesized image by synthesizing a third video image following the second video image with the screen capture image including the transparentized video area; and
blur the third synthesized image, and
wherein the at least one graphic image is configured to be sequentially displayed on one screen with each of the first video image, the second video image, and the third video image.

8. The display device of claim 1,
wherein the first video image and the at least one graphic image have different data formats, and
wherein the first video image and the first screen capture image have the same data format.

9. The display device of claim 1, wherein the at least one instruction, when executed by the at least one processor, further cause the display device to:
identify an event related to the blurring; and
obtain the first screen capture image based on identifying the event related to the blurring.

10. A method of a display device, the method comprising:
obtaining a first screen capture image having a first data format by capturing a first synthesized image generated based on a first video image and at least one graphic image using a screen capture method, wherein the first data format does not comprise a transparency element indicating transparency;
changing a data format for the first screen capture image from the first data format to a second data format comprising the transparency element;
transparentizing a video area associated with the first video image in the first screen capture image by adjusting a value of the transparency element for the video area, based on data of the second data format;
generating a second synthesized image based on a second screen capture image comprising the transparentized video area and the first video image or a second video image following the first video image, wherein an area where the first video image or the second video image is displayed in the second synthesized image is in the transparentized video area;
blurring the second synthesized image; and
displaying at least a portion of the blurred second synthesized image.

11. The method of claim 10,
wherein the at least one graphic image comprises a first graphic image and a second graphic image, and
wherein a window comprising the first graphic image and a window comprising the second graphic image are positioned in different layers.

12. The method of claim 10 or 11,
wherein the first data format is a YUV data format, and the second data format is an RGBA data format, and
wherein transparentizing the video area comprises adjusting an alpha value of pixels corresponding to the video area to 0 in data of the second data format.

13. The method of any one of claims 10 to 12, wherein obtaining the first screen capture image is performed before a blur application associated with the blurring or graphic information associated with the blur application is displayed on a screen.

14. The method of claim 10, wherein the second synthesized image is generated by positioning the second video image in a lower layer than a layer comprising the second screen capture image.

15. The method of claim 10, wherein blurring the second synthesized image comprises:
applying a blur effect to the second synthesized image; and
outputting graphic information associated with a blur application supporting the blurring on the second synthesized image to which the blur effect is applied.
